# EUROPÄISCHE PATENTSCHRIFT

(11) **EP 0 951 639 B1**
(45) Veröffentlichungstag und Bekanntmachung des Hinweises auf die Patenterteilung: **08.05.2002**
(21) Anmeldenummer: 98905244.4
(22) Anmeldetag: 09.01.1998
(51) Int. Cl.: G01L 7/08

(54) **MEMBRAN FÜR EINEN DRUCKSENSOR**
MEMBRANE FOR PRESSURE SENSOR
MEMBRANE POUR DETECTEUR DE PRESSION

(30) Priorität: 13.01.1997 DE 19700773
(43) Veröffentlichungstag der Anmeldung: 27.10.1999
(73) Patentinhaber: ROBERT BOSCH GMBH, 70442 Stuttgart (DE)
(72) Erfinder: NÄGELE, Erwin, D-74394 Hessigheim (DE); MAST, Martin, D-70839 Gerlingen (DE); FISCHER, Werner, D-87544 Blaichach (DE); FOERSTNER, Rainer, D-87545 Burgberg (DE)
(86) Internationale Anmeldenummer: DE9800088
(87) Internationale Veröffentlichungsnummer: WO9830877

(56) Entgegenhaltungen:
- EP-A- 0 636 593
- US-A- 4 787 250
- US-A- 5 005 421
- US-A- 5 184 514

## Beschreibung

### Stand der Technik

Die Erfindung betrifft ein Verfahren zur Herstellung von Drucksensoren nach dem Oberbegriff des Anspruchs 1.

Bei herkömmlichen Metallmembranen, insbesondere für Hochdrucksensoren, wird die gesamte Membran einschließlich der Stützelemente vorzugsweise aus nichtrostendem Stahl in einem Stück hergestellt. Aufgrund der hohen Anforderungen an die Eigenschaften der Membranen sind bei der Herstellung aufwendige Arbeitsgänge, wie Drehen, Schleifen, Läppen und Hochglanzpolieren an dem einstückigen Metallteil notwendig. Zur weiteren Komplettierung der Membran mit Sensorelementen ist in vielen Fällen auf den Metallmembranen eine Dünnfilm-Beschichtung erforderlich.

Diese Verfahrensschritte erfordern eine aufwendige Handhabung, die insbesondere bei Einzelteilen relativ kostenintensiv ist und die zudem zu Beschädigungen an diesen Einzelteilen führen kann.

Aus der EP 0 636 593 A2 ist ein Drucksensor bekannt, der allerdings aus Keramik besteht und daher nur für kleine Druckbereiche einsetzbar ist. Um beim Brennprozeß dieses Drucksensors Aufwölbungen oder Risse in der Membran zu vermeiden, werden in dieser Druckschrift spezielle Materialzusammensetzungen und Fertigungsparameter vorgeschlagen, ohne jedoch auf die Handhabung der Einzelteile einzugehen. Anregungen, derartige Drucksensoren in Mehrfach-Nutzen herzustellen kann ein Fachmann dieser Druckschrift nicht entnehmen.

Gleiches gilt für die Druckschrift US 4,787,250, in der ein Druckwandler offenbart ist. Dessen Membran hat im Unterschied zu der eines Drucksensors eine Trenn- aber keine Meßfunktion.

### Vorteile der Erfindung

Der Membran der eingangs beschriebenen Art ist in der erfindungsgemäßen Weiterbildung mit den kennzeichnenden Merkmalen des Anspruchs 1 dadurch vorteilhaft, daß die Membranfläche als Teil aus einem Edelstahlband kostengünstig separat herstellbar ist, wobei die erforderlichen Eigenschaften auf einfache Weise gewährleistet werden. Bei Membrandicken von ca. 0,4 bis 1 mm (ev. auch größer) sind dabei Dickentoleranzen von < 5% der Membrandicke einzuhalten. Die Oberflächengüte sollte auf der Oberseite einen Wert von Rz < 0,1 µm aufweisen.
Um auf einfache Weise eine Lagefixierung der Metallmembran zu ermöglichen, weist das aus dem Edelstahlband gestanzte Membranteil an der Außenseite eine Fixiernase auf.
Die erfindungsgemäße Membran kann auch in vorteilhafter weise in einem Mehrfach-Nutzen-Herstellungsverfahren produziert werden, wobei ein einziges Blechteil mehrere Stützkörper und damit mehrere Membranen tragen kann. Die erforderlichen Fertigungsprozesse der Dünnfilm-Beschichtung können hierbei in vorteilhafter Weise auf alle Membranflächen des Edelstahlbandes gleichzeitig aufgetragen werden.
Weitere vorteilhafte Ausführungsformen sind in den Unteransprüchen angegeben.

### Zeichnung

Ausführungsbeispiele einer Membran für einen Drucksensor werden anhand der Zeichnung erläutert. Es zeigen:
Figur 1 eine Prinzipdarstellung eines Drucksensors mit einer herkömmlichen einstückig hergestellten Membran;
Figur 2 eine Prinzipdarstellung einer erfindungsgemäßem Membran mit aufgelötetem Stützkörper;
Figur 3 eine Ansicht eines Stützkörpers mit Fixiernase und
Figur 4 ein Ansicht von Membranen in einer Mehrfach-Nutzen-Herstellung.

### Beschreibung der Ausführungsbeispiele

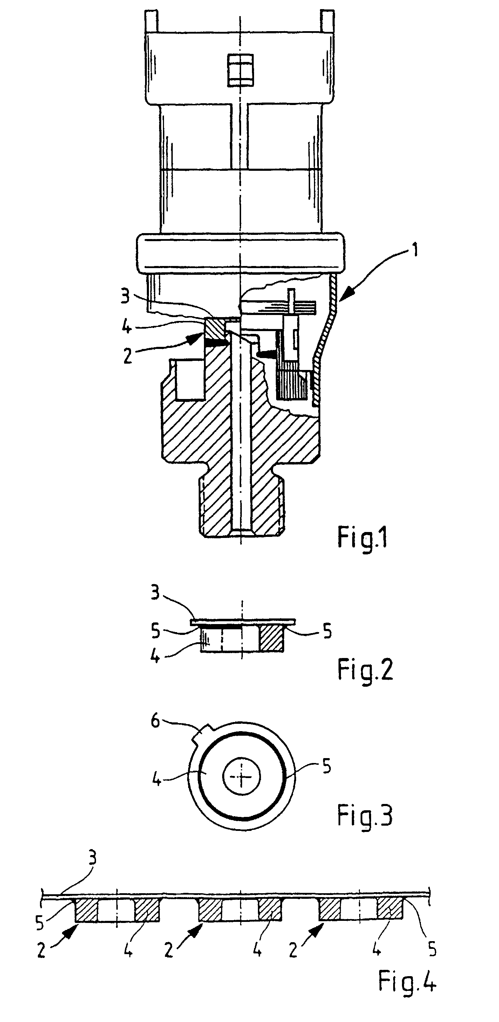

In Figur 1 ist ein Drucksensor 1 dargestellt, der in seinem Inneren eine Membran 2 aufweist, welche auf einer Seite der Membranfläche 3 mit einem Flüssigkeits- oder Gasdruck beaufschlagt werden kann und auf einer Seite der Membranfläche 3 Sensorelemente trägt. Bei der Membran 2 nach der Figur 1 handelt es sich um eine herkömmliche Ausführung, die einstückig mit einem Stützkörper 4 hergestellt ist.
Bei der Membran 2 nach Figur 2 handelt es sich um eine Ausführung, die aus einem vorgefertigten Bandteil 3 als Membranfläche und einem über eine Lötnaht 5 angefügten, ebenfalls separat hergestellten Stützkörper 4 besteht. Als Bandteil 3 kann z.B. ein Walzteil oder eingestanztes Teil, ein Edelstahlband oder ein Blechteil verwendet werden. Der Stützkörper 4 kann als Ring oder als im Querschnitt rechteckiges oder quadratisches Teil ausgebildet sein. In einfacher Weise ist er als Stanzteil kostengünstig herstellbar.

Die Ausführungsform nach Figur 3 zeigt ein Bandteil 3, das zur Lagefixierung der Membran 2 im Drucksensor 1 eine Fixiernase 6 aufweist.
Bei der Ausführungsform nach Figur 4 sind eine Anzahl von Membranen 2 an einem einzigen Bandteil 3 hergestellt. Dieser Mehrfach-Nutzen wird anschließend nach der Dünnfilm-Beschichtung in die Einzelteile aufgeteilt. Die Stützkörper 4 sind wie oben beschrieben an das Bandteil 3 angelötet. Auf die Oberseite des Bandteils 3 kann die, hier nicht sichtbare, Dünnfilm-Beschichtung zur Herstellung von Sensorelementen in an sich bekannter Weise aufgebracht werden.

## Patentansprüche

1. Verfahren zur Herstellung von Drucksensoren (1), die jeweils eine auf einem Stützkörper (4) angeordnete und Sensorelemente tragende Membran (3) aufweisen, **dadurch gekennzeichnet, daß** ein als Membran (3) wirkendes metallisches Bauteil mit Stützkörpern (4) verbunden wird, daß auf der Membran (3) eine Dünnfilm-Beschichtung zur Herstellung von Sensorelementen aufgebracht wird und daß die mit der Dünnfilm-Beschichtung und den Stützkörpern (4) versehene Membran (3) in eine der Anzahl der Stützkörper (4) entsprechende Anzahl von Drucksensoren (1) aufgeteilt wird.

2. Verfahren zur Herstellung von Drucksensoren nach Anspruch 1, **dadurch gekennzeichnet, daß** als Membran (3) ein Bauteil verwendet wird, dessen Dickentoleranz < 5% der Dicke der Membran (3) beträgt und dessen Oberflächengüte auf der Oberseite einen Wert von Rz < 0,1 µm aufweist.

3. Verfahren zur Herstellung von Drucksensoren nach Anspruch 1 oder 2, **dadurch gekennzeichnet, daß** die Membran (3) und Ringe als Stützkörper (4) miteinander verlötet werden.

4. Verfahren zur Herstellung von Drucksensoren nach Anspruch 3, **dadurch gekennzeichnet, daß** an der Membran (3) mindestens eine Fixiernase (6) vorgesehen wird.

## Claims

1. Method for producing pressure sensors (1) which each have a membrane (3) which is arranged on a support body (4) and bears sensor elements, **characterized in that** a metallic component which acts as membrane (3) is connected to support bodies (4), **in that** a thin-film coating is applied to the membrane (3) to produce sensor elements, and **in that** the membrane (3) provided with the thin-film coating and the support bodies (4) is divided into the same number of pressure sensors (1) as the number of support bodies (4).

2. Method for producing pressure sensors according to Claim 1, **characterized in that** the membrane (3) used is a component in which the thickness tolerance is < 5% of the thickness of the membrane (3) and the surface quality of which, on the upper side, has a value of Rz < 0.1 µm.

3. Method for producing pressure sensors according to Claim 1 or 2, **characterized in that** the membrane (3) and rings as support bodies (4) are soldered to one another.

4. Method for producing pressure sensors according to Claim 3, **characterized in that** at least one fixing lug (6) is provided on the membrane (3).

## Revendications

1. Procédé de fabrication de capteurs de pression (1) comportant chaque fois une membrane (3) portée par un organe de support (4) et munie d'éléments de capteur,
**caractérisé en ce que**
comme membrane (3), on utilise une pièce métallique reliée à des organes d'appui (4), la membrane (3) porte un revêtement formant un film mince pour fabriquer des éléments de capteur, et
la membrane (3) munie du revêtement de film mince et des organes d'appui (4) est divisée en un nombre de capteurs de pression (1) correspondant au nombre d'organes d'appui (4).

2. Procédé de fabrication de capteurs de pression selon la revendication 1,
**caractérisé en ce que**
la membrane (3) est une pièce dont la tolérance d'épaisseur est inférieure 5 % de l'épaisseur de la membrane (3) et dont la cavité de surface pour la face supérieure a une valeur Rz < 0,1 µm.

3. Procédé de fabrication de capteurs de pression selon les revendications 1 ou 2,
**caractérisé en ce que**
la membrane (3) et les anneaux formant des organes d'appui (4) sont brasés.

4. Procédé de fabrication de capteurs de pression selon la revendication 3,
**caractérisé en ce que**
la membrane (3) comporte au moins un bec de fixation (6).
